# NEW EUROPEAN PATENT SPECIFICATION

(11) **EP 2 122 160 B3**
(45) Date of publication of this specification: **09.03.2016**
(45) Mention of the grant of the patent: 30.11.2011
(21) Application number: 08718731.6
(22) Date of filing: 13.03.2008
(51) Int. Cl.: F03B 13/26, F03B 17/06

(54) **Underwater power generator**
Unterwassergenerator
Générateur de puissance sous-marine

(30) Priority: 14.03.2007 GB 0704897; 22.05.2007 GB 0709802
(43) Date of publication of application: 25.11.2009
(73) Proprietor: Rotech Holdings Limited, Aberdeen AB2 6HQ (GB)
(72) Inventor: STEWART, Kenneth, Roderick, Aberdeen AB2 6HQ (GB); SUSMAN, Hector, Filippus, Alexander, Van, Drentham, Aberdeen AB2 6HQ (GB); STEWART, Donald, Aberdeen AB2 6HQ (GB)
(74) Representative: Moreland, David
(86) International application number: PCT/GB2008/000889
(87) International publication number: WO 2008/110811

(56) References cited:
- WO-A-00/77393
- WO-A-03/029645
- WO-A-03/083292
- WO-A-2004/022968
- WO-A-2006/125959
- DE-A1- 2 631 122
- FR-A- 2 880 389
- GB-A- 2 292 405
- GB-A- 2 409 885
- US-A- 4 163 904
- US-A- 4 468 153
- US-A1- 2005 285 407

## Description

### FIELD OF INVENTION

The present invention relates to a power generator and to a turbine unit. In particular, but not exclusively, the present invention relates to an electrical power generator, for example, comprising an underwater turbine unit, and to an underwater turbine unit.

The invention also relates to an underwater power generator, e.g. powered by tidal stream or underwater currents, and to a power generation farm using at least one or a plurality of such generators.

### BACKGROUND TO INVENTION

To meet increasing energy needs, there is a general desire to develop environmentally friendly methods of generating electrical power. One particular area of interest involves the generation of power using tidal energy. This may be achieved by using underwater turbines.

Problems associated with known underwater turbines include the need to carefully seal generator assemblies provided as part of the turbine to prevent the ingress of water, and also maintenance difficulties. This is because the complete turbine must be recovered to allow maintenance to any turbine part. There have also been difficulties in optimising electrical power generation.

The content of WO 03/029645 A1 (ROTECH HOLDINGS LIMITED) and of WO 2006/125959 A1 (ROTECH HOLDINGS LIMITED) are incorporated herein by reference.

A number of problems have been identified in the prior art.

One problem relates to the facilitation of initial positioning of the turbine unit part within the underwater turbine unit, e.g. when on land, such as in a fabrication yard or dock, when above surface, such as a vessel or when underwater.

Another problem relates to facilitation of removal of the turbine unit part from and/or replacement of the turbine unit part within the underwater turbine unit, e.g. when underwater.

Another problem relates to positioning of the underwater turbine unit underwater on a sea bed, ocean floor or river bed in a stable position, and/or desired orientation.

Another problem relates to the stability of the turbine unit when on the sea bed, ocean floor or river bed.

Another problem relates to sealing between the turbine unit part and the housing.

Another problem to be addressed is the provision of a renewable and predictable power generator.

It is an object of at least one embodiment of at least one aspect of the present invention to obviate or at least mitigate one or more problems in the prior art.

It is a further object of one or more embodiments of at least one aspect of the present invention to provide an underwater turbine unit, which, in use, is driven by tidal and/or current flow, and which can preferably operate in ebb and/or flood tides without a need for movement or realignment into a tidal flow direction.

It is a yet further object of at least one embodiment of at least one aspect of the present invention to provide a power generator apparatus or farm, which is substantially or wholly underwater, thereby minimising environmental impact.

It is a still further object of at least one embodiment of at least one aspect of the present invention to provide a power generator apparatus wherein maintenance may be carried out without diver or ROV (Remotely Operated Vehicle) intervention.

WO2004/022968 (HAMMERFEST STRÖM) concerns an apparatus for anchoring an axial turbine to a seabed. The axial turbine is supported in a housing and is adapted for rotational movement about a first axis. The apparatus includes a carrying pillar, with two ends and pillar defines a second axis along its lengths. The housing is adapted to rigidly secure to the other end of the carrying pillar, and the carrying pillar is adapted to be rigidly secured to the seabed.

GB 2 297 405 A (MCDERMOTT INTERNATIONAL) discloses an offshore structure and method of repositioning the structure comprising a vertically extending service caisson which contains service items needed between a fixture on the offshore structure and the seabed. Bracing elements are connected between mid-height or lower on the caisson, and a plurality of foundations fixed to the seabed.

### SUMMARY OF INVENTION

According to a first aspect of the present invention there is provided an underwater power generator, such as an electrical power generator according to the appended claims.

This provides a particularly stable arrangement.

The at least one underwater turbine unit may be provided above the plurality of bars.

The legs may be hollow.

The legs may include ballast.

A volume of the first and second legs may be substantially the same.

A volume of the third leg may be greater than, e.g. substantially double, the volume of either of the first or second legs.

The legs being provided longitudinally outwardly of the ends of flow channel and/or transversely outwardly of sides of the flow channel facilitates ease of lifting of the generator by means of the legs.

The underwater power generator may comprise a first housing part, a second housing part and means for connecting and/or spacing the first and second housing parts together.

The underwater power generator may comprise a housing and a turbine module, wherein the turbine module is removably receivable relative to or within the housing, and wherein there are provided sealing means between the housing and the turbine module.

### BRIEF DESCRIPTION OF DRAWINGS

Embodiments of the invention will now be described by way of example only, and with reference to the accompanying drawings, which are:
- **Figure 1**: a schematic side view of a power generator according to a first embodiment of the present invention;
- **Figure 2**: a schematic top view of a support base or tripod comprising part of the power generator of Figure 1;
- **Figure 3**: a schematic end view of the power generator of Figure 1;
- **Figure 4**: a top view of a turbine module or cassette of the power generator of Figure 1;
- **Figure 5**: a top view of a housing and turbine module of a power generator of Figure 1;
- **Figure 6**: a side view of the turbine module of Figure 4;
- **Figure 7**: a side view of the turbine module attached to a docking device or aid;
- **Figure 8**: a front view of the turbine module attached to the docking aid of Figure 7;
- **Figure 9**: a front cross-sectional view of part of the housing of the power generator of Figure 1;
- **Figure 10**: a front view of the turbine module of Figure 4;
- **Figure 11**: a partially cutaway perspective view from one end of a power generator according to a second embodiment of the present invention;
- **Figure 12**: a perspective view from one end of a power generator falling outwith the scope of the present invention;
- **Figure 13**: a plurality of the power generators of Figure 12 operatively connected to form a tidal stream power farm;
- **Figure 14**: a schematic side view of a power generator according to a third embodiment of the present invention with a turbine module or cassette thereof removed;
- **Figure 15**: a schematic end view of the power generator of Figure 14;
- **Figure 16**: a cross-sectional side view of a turbine module or cassette of the power generator of Figure 14 attached to a docking device or aid;
- **Figure 17**: an end view of the turbine module of Figure 16 attached to the docking aid;
- **Figure 18**: an exploded side cross-sectional view of part of the power generator of Figure 14; and
- **Figures 19 (a) and (b)**: side and end views of a power generator according to a fourth embodiment of the present invention.

### DETAILED DESCRIPTION OF DRAWINGS

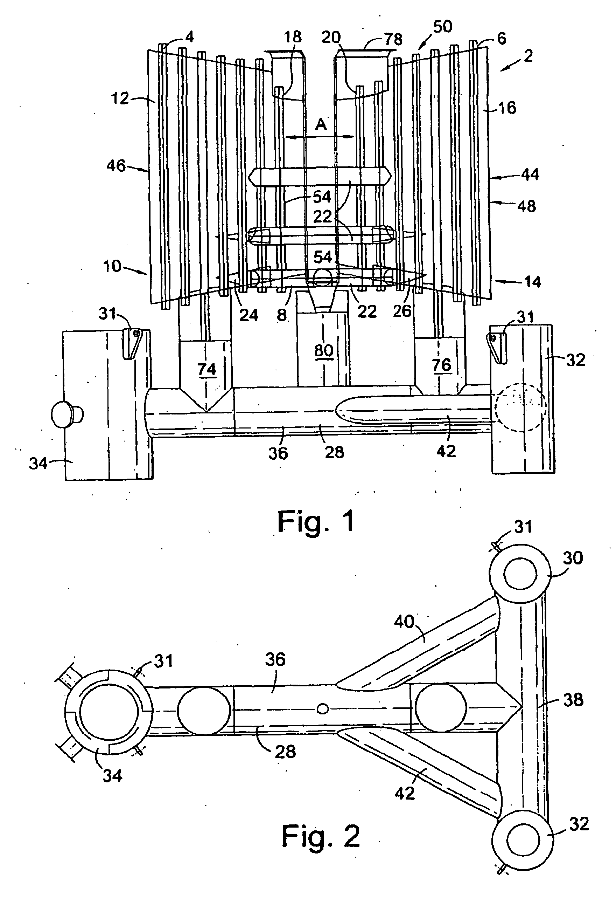

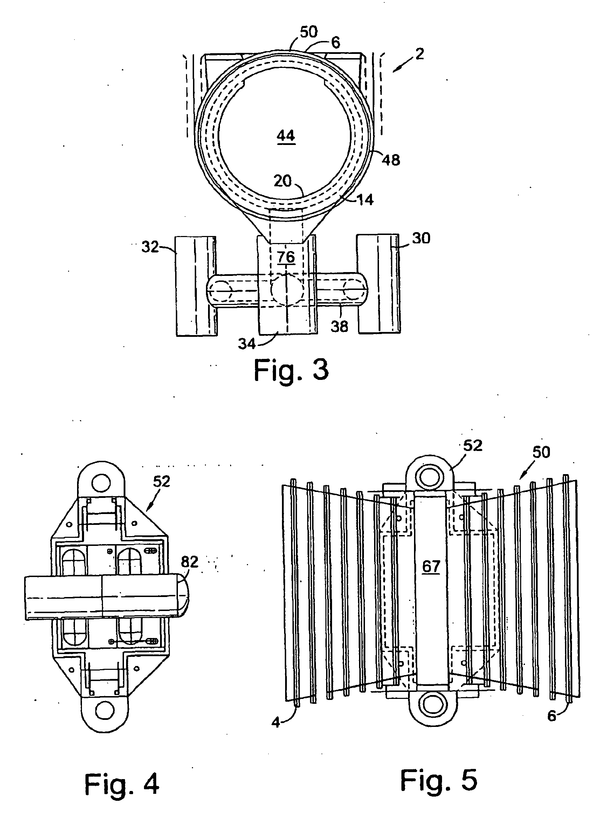

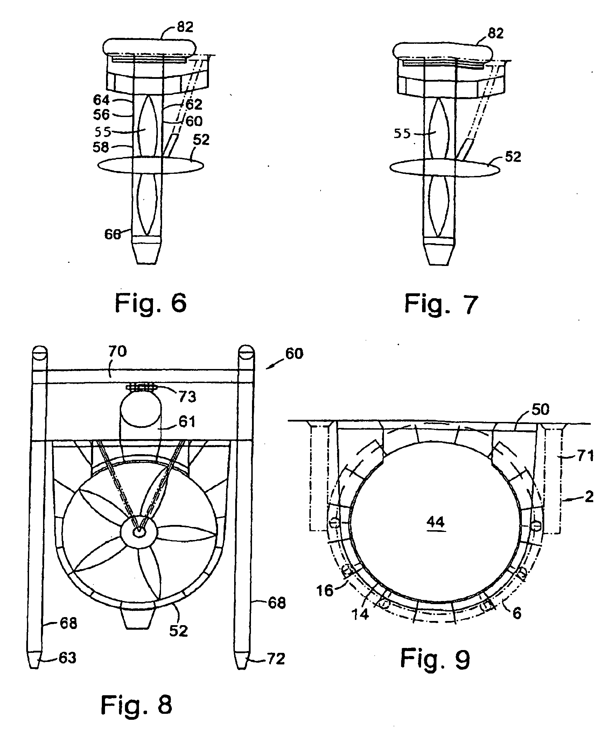

Referring to Figures 1 to 10, there is provided an underwater electrical power generator or turbine unit or tidal device, generally designated 2, according to a first embodiment of the present invention and which includes the features hereinbefore described under the heading "Summary of Invention".

The underwater electrical power generator 2 comprises a first housing part 4, a second housing part 6 and means 8 for connecting the first and second housing parts 4,6 together. The first housing part 4 comprises an at least partly frusto-conical inner surface 10 and/or comprises an at least partly frusto-conical outer surface 12. The second housing part 6 comprises an at least partly frusto-conical inner surface 14 and/or comprises an at least partly frusto-conical outer surface 16.

Ends 18,20, i.e. narrower ends of the first and second housing parts 4,6 are proximally spaced.

The connecting means 8 control or select a spacing between the first and second housing parts 4,6. The connecting means 8 comprise a plurality of elongate members or bars 22. One end 24 of each bar 22 is attached/attachable, e.g. optionally detachably attached/attachable, to the first housing part 4, and another end 26 of each bar is attached/attachable, e.g. optionally detachably attached/attachable, to the second housing part 6. The ends 24,26 are flanged. The ends 24,26 are welded, bolted or otherwise fixed to the respective housing part, e.g. on an outer surface thereof. The bars 22 are akin to launching brackets for ships.

The bars 22 are provided around lower circumferential surfaces of the housing parts 4,6, the bars 22 being circumferentially spaced from one another. In this embodiment seven bars 22 are provided.

The underwater electrical power generator 2 comprises a base 28, wherein the base 28 comprises three legs 30,32,34. This provides a particularly stable arrangement.

There are provided a pair of legs or pillars 30,32 at one end, and a third leg or pillar 34 at another end. The first and second legs 30,32 are substantially symmetrically disposed on respective sides of a longitudinal axis of the power generator 2. The third leg 34 is provided upon the longitudinal axis (as viewed from above).

The legs 30,32,34 are typically hollow, and include ballast. A volume of the first and second legs 30,32 is substantially the same. A volume of the third leg 34 is substantially double the volume of either of the first or second legs. That is to say, the volume of the third leg 34 is substantially the same as the combined volume of the first and second legs 30,32.

A bar (torsion bar) 36 is provided longitudinally extending from the third leg 34 to between the first and second legs 30,32. A further bar 38 is provided (transversely) between the first and second legs 30,32, an end of the bar 36 being connected thereto. First and second symmetrically disposed yet further bars 40,42 are provided between the bar 36 and the further bar 38.

The underwater electrical power generator 2 comprises a flow channel 44 having first and second ends 46,48 and the plurality of legs 30,32,34, wherein the legs 30,32,34 are provided longitudinally outwardly of the ends 46,48 of the flow channel 44.

This facilitates ease of lifting of the underwater electrical power generator 2 by means of the legs 30,32,34. This is because lifting means - such as straps or webs - can be easily placed around the bar/further bar 36,38 connected to the respective legs 30,32,34. Such lifting means associated with each leg 30,32,34 allows for three point lifting. Lifting brackets 31 are additionally or alternatively provided for fixing of webs or straps for lifting.

In the disclosed arrangement there are provided the pair of legs 30,32 outwardly of one end 46 and the third leg 34 outwardly of the other end 48. The pair of legs 30,32 are provided outwardly of respective lateral or transverse sides of the housing 50 comprising housing parts 4,6.

The underwater electrical power generator 2 comprises housing 50 and a turbine module 52, wherein the turbine module 52 is removably receivable relative to or within the housing 50, and wherein there are provided sealing means 54 between the housing 50 and the turbine module 52.

The housing 50 comprises first and second housing parts 4,6. The turbine module 52 is locatable between the first and second housing parts 4,6. The sealing means 54 typically comprises a polymeric material. The sealing means 54 comprise first sealing means 56 provided between a first end 58 of the module 52 and the first housing part 4. The sealing means 54 comprises second sealing means 60 provided between a second end 62 of the module 52 and the second housing part 6. A first part of the first sealing means 56 are provided on a lower face of a flange 64 provided around at least part of an upper circumferential part of the first end 58 of the module 52. A second part of the first sealing means 56 are provided on a lower face of another flange 66 or part provided around at least part of a lower circumferential part of the first end 58 of the module 52. In use, the second part of the first sealing means 56 abut an upper surface of a flange 67 provided on the housing part 4.

The second sealing means 60 are the same as or similar to the first sealing means 56 but provided on the second end 62 of the module 52.

By this arrangement the device 5 self seals. The weight of the turbine module 52 causes the sealing means 54 to seal between the turbine module 52 and the first and second housing parts 4, 6.

The underwater power generator 2 comprises at least one ground engaging leg 30,32,34, wherein at least part of the ground engaging legs 30,32,34 comprises a peripherally extending skirt or ground engaging means. The peripherally extending skirt or ground engaging means assists in the at least one leg 30,32,34 digging into the ground, e.g. sea bed, ocean floor or river bed.

The underwater power generator 2 comprises at least one underwater turbine unit providing housing 50 having flow channel 44 therethrough and at least one turbine means, i.e. module 52, mounted in the flow channel 44 for rotation in response to water flow through the flow channel 44, wherein the turbine unit provides turbine unit part or turbine module 52 releasably mountable in the turbine unit, the turbine unit part or module 52, including at least one of the at least one turbine means 54 and a pump means. The turbine unit part or module 52 is releasably mountable through an aperture or gap in a side wall of the housing 50.

The power generator 2 comprises at least one underwater turbine unit providing housing 50 and at least one turbine means 55, the housing 50 having a liquid flow channel 44 extending therethrough between first and second ends of the housing 50, the flow channel 44 defining a flow restriction comprising a venturi, and the at least one turbine means or module 52 being mountable in the flow channel 44 for rotation along an axis parallel to the flow channel 44, wherein, in use, the housing 50 is stationary and the turbine means 55 rotates in response to liquid flow through the flow channel 44, and wherein the housing 50 is provided with a waist 56 on an outermost surface thereof, the waist 56 being narrower than the first and second ends of the housing 50.

The underwater turbine unit or module 52 optionally and beneficially comprises at least one turbine means 55, the turbine means 55 comprising at least one blade 58, the at least one blade 58 comprising at least one aerofoil which is symmetrical about a mid-chord line thereof.

A docking device 60 for installing and/or removing turbine module 52 from a housing 50 or remainder of an underwater power generator or turbine unit 2 is also provided, as will hereinafter be described in greater detail.

The docking device 59 has means 61 for releasably connecting the docking device 59 to the turbine module 52. The docking device 59 also has means 63 for positioning the docking device 59 relative to the housing 50.

A method of assembling an underwater power generator 2 comprises the steps of:
(a) providing first and second spaced housing parts 4,6;
(b) providing connection means 8 for the first and second housing parts 4,6;
(c) locating turbine module 52 between the housing parts 4,6;
(d) longitudinally moving one or both of the housing parts 4,6 and/or turbine module 52 to suitably locate the housing parts 4,6 and turbine module 52 relative to one another; and
(e) securing the connection means 8.

In a preferred implementation step (e) is carried out after step (d). However, step (e) can be carried out before step (d). Suitable location allows for removal of the module 52 from the housing parts 4,6 either on-shore or *in situ* underwater. Suitable location also allows for sealing means 54 between the module 52 and the first and/or second housing parts 4,6 to seal.

The module 52 provides an annular member 62, which, optionally with the housing parts 4,6, form a housing or cowal for a turbine means 55 of or in the module. The housing 50 comprises through flow channel 44 within which the turbine means 55 is located for rotation around a longitudinal axis of the channel 44.

This invention provides a system for retaining tidal turbines on the seabed and allowing ease of extraction and replacement of the turbine and moving parts for repair and maintenance.

In order to retain tidal devices *in situ* it is necessary to overcome the sliding, turning and overturning forces exerted on the device by the tidal currents and weather influenced forces. Various methods exist to overcome these forces and retain tidal turbines on the seabed, including the use of piling, anchoring or the use of gravity foundations. Significant technical difficulties and risks are associated with piling and the use of anchors, and therefore the beneficial method according to the invention employs a gravity foundation which requires neither piling nor the use of anchors, such as described in the prior art.

Devices to extract energy from tidal currents are by their nature located in areas of high tidal currents, and are subject to high forces which means very large weights are required to keep devices in situ. To avoid recovery of the whole structure to the surface and allow recovery of the turbine and moving parts for repair and maintenance (referred to as the turbine module 52) it is, therefore, preferable that they are held in a separately mounted and extractable unit held within the main structural housing of the tidal device. It is important that sealing integrity between the main structure or housing 50 and the extractable turbine module 52 is achieved during the manufacturing and construction phase and maintained to allow extraction and re-insertion of the turbine module throughout the life of the power generator or tidal device 2. As the tidal device may remain on the seabed for 25 years or more, design to achieve dimensional stability over many years is extremely important.

In order to deploy the turbine module in the tidal device, it is preferable, that the turbine module 52 has a polymeric seal which engages with the housing of tidal device to form a seal. (To allow replacement of the seal it is important that at least part of the seal is attached to the turbine module 52 and not the housing 50).

Movement of the structure of the tidal device will result in the fit between the turbine module 52 and the housing 50 or tidal device either loosening or tightening. A loose fit between the turbine module 52 and the housing 50 will give: (i) poor sealing integrity and therefore loss of performance, and (ii) will result in the turbine module moving in the tidal device 2 with the thrust from the reversing tides. If the fit tightens the turbine module 52 may bind in the tidal device 2 preventing its removal or preventing its re-insertion.

The tidal device 2 of the invention has two separate housing sections or parts 4,6 (which form two venturi like ducts) that because of their overhung nature would have a tendency to sag over time. To obviate this tendency adjustable stretcher bars or connection means 8 are employed to tie the two housing sections 4,6 together and provide stiffening and give final adjustment of gap dimensions for the power generator 2.

To further maintain structural stability the housing parts 4,6 and the turbine module 52 are mounted on a large torque bar 36 suspended by a tripod arrangement which obviates the requirement for seabed preparation. The tripod arrangement consists of three vertical tubes or pillars or legs 30,32,34, which may be manufactured from steel and carry ballast, connected by the torque bar 36 and crossbars 38,40,42.

The single leg 34 has a cross-sectional area that is equal to the sum of the cross-sectional areas of the two legs 30,32 at either end of the crossbar 38 in order to maintain equal soil bearing pressure underneath the legs 30,32,34 and prevent differential settlement and sagging. In the case of deployment of the tidal device 2 on a sandy or muddy seabed the pillars 30,32,34 are furnished with so-called "skirts", e.g. peripherally, which enlarge the surface area and offer resistance to sinkage.

During the installation of the turbine module 52, to prevent damage to the seaing means 54, it is important that the turbine module 52 is accurately installed in the housing 50. To achieve accurate installation a docking device 60 is used to guide the turbine module 52 into the housing 50. The docking device 60 comprises two vertical stabbing 68 pins and a horizontal spreaderbeam 70 with hydraulically actuated lock or latching means 73 for fixing to the turbine module 52. Attached to the tidal device 2 are "buckets" or hollow tubular means 71 which catch and guide the stabbing pins 68 as the docking device 60 (with turbine module 52) is lowered from a crane onboard a surface vessel (not shown).

As the turbine module 52 is lowered into the tidal device 2, a trapezium shaped docking means 72 located on the bottom of the turbine module 52 engages with a receptacle 71 on the tidal device 2 and secures the turbine module 52 in position. At the same time docking means located at the top of the turbine module engage with pins on the tidal device 2.

When the turbine module 52 has engaged with the tidal device 2, the hydraulic lock means 73 on the docking aid is released, and the docking aid is retrieved to the surface vessel.

To retrieve the turbine module 52 the docking device or aid 60 is lowered into the receiving buckets on the tidal device 2 until it engages with the turbine module 52 and after latching on to the turbine module 52 both are recovered to the surface. Maintenance or replacement of the turbine module 52 is therefore possible.

In this embodiment the first and second housing parts 4,6 are connected to the bar 36 by respective first and second supports 74,76.

Between the housing parts 4,6 is provided a turbine module receiving means 78 and a turbine module support post 80. The turbine module 52 provides a generator module 82.

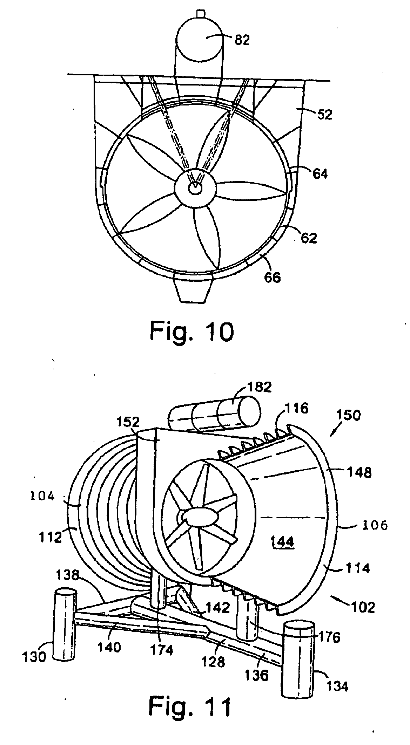

Referring now to Figure 11, there is shown a power generator 102 according to a second embodiment of the present invention, like parts being denoted by the same numerals as for the generator 2 of Figure 1, except incremented by "100".

The generator 102 differs from the generator 2 in that the generator 102 does not provide a turbine module support post.

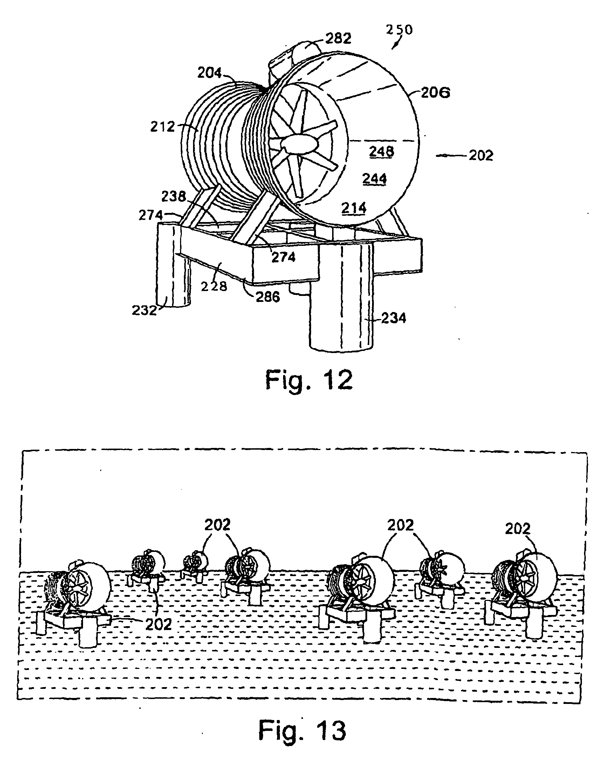

Referring now to Figures 12 and 13, there is shown a power generator 202 falling outwith the scope of the present invention, like parts being denoted by the same numerals as for the generator 2 of Figure 1, except incremented by "200".

The generator 202 has a rectilinear base 284 with struts 274 extending from the first and second housing parts 204,206 to longitudinal edges 286 of the base 228.

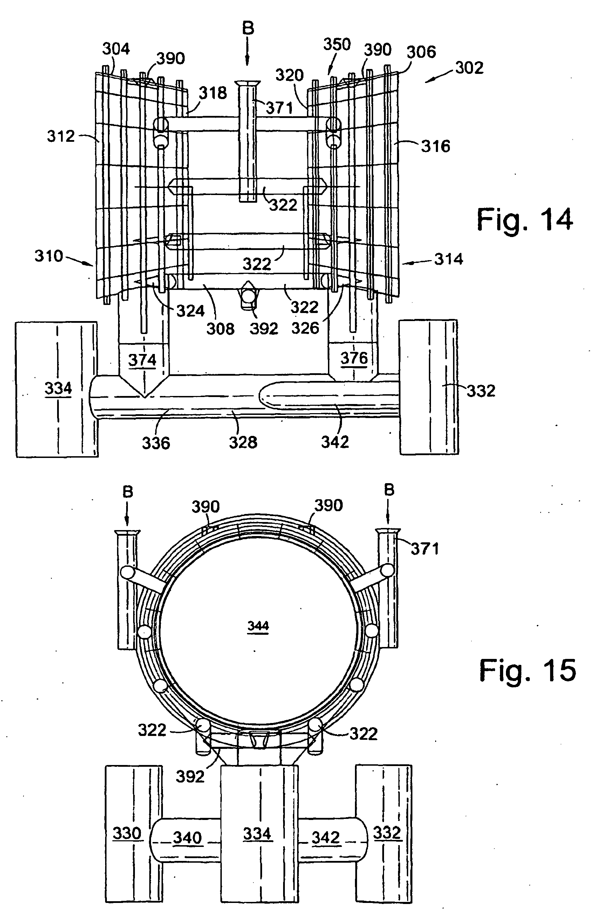

Referring now to Figures 14 to 18, there is shown a power generator or turbine unit 302 according to a third embodiment of the present invention, like parts being denoted by the same numerals as for generator 2 of Figure 1, except incremented by "300".

The underwater power generator 302 comprises a housing 350 and a turbine module 352, wherein the turbine module 352 is removably receivable relative to or within the housing 350, and wherein there are provided sealing means 354 between the housing 350 and the turbine module 352.

The housing 350 comprises first and second housing parts 304,306. The turbine module 352 is locatable between the first and second housing parts 304,306. The sealing means 354 typically comprise a polymeric material. The sealing means 354 comprise first sealing means 356 provided between a first end 358 of the module 352 and the first housing part 304. The sealing means 354 comprise second sealing means 360 provided between a second end 362 of the module 352 and the second housing part 306. The first sealing means 356 are provided on a lower face of a flange 304 provided around at least part of an upper circumferential part of the first end 358 of the module 352. The first sealing means 356 are provided on a lower face of another flange or part 366 provided around at least part of a lower circumferential part of the first end 358 of the module 352. The second sealing means 360 are the same as or similar to the first sealing means 356 but provided on the second end 362 of the module 352.

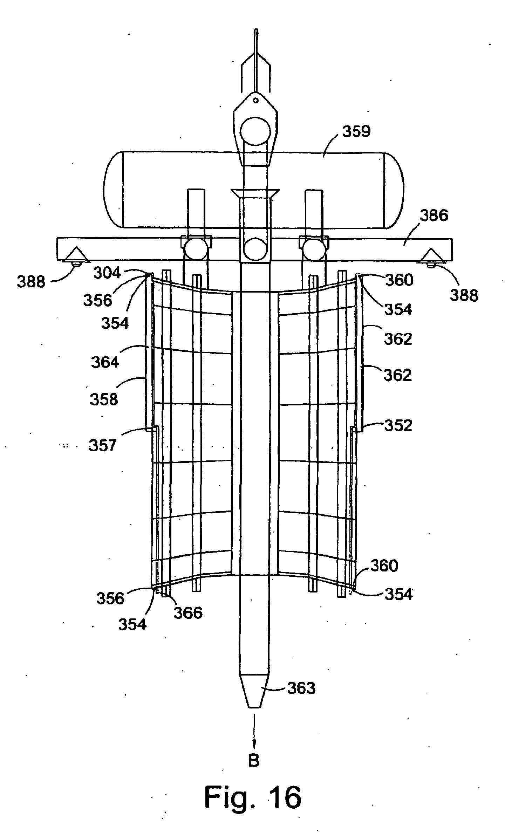

As can be seen from Figure 16, a first part of the first sealing means 356 provided on a lower face of the flange 364 is longitudinally outward of a second part of the first sealing means 356 provided on lower face of part 366. The first and second parts of the first sealing means 356 are continual or integral with one another, having a kink or L-shaped step at a midpoint 357 adjacent the end of the first housing part 4. The second sealing means 360 are similarly arranged at the opposing end of the second housing part 6.

The turbine module 352 also comprises a support member or yoke 386. The support member 386 comprises pins 388; in this arrangement there are provided four pins 388, two at either end of the support member 386. The pins 388 mate with corresponding recess 390 on the first and second housing parts 304,306, when the turbine module 353 is lowered into place. The weight of the turbine module 352 is therefore supported by the support member 386 through the first and second housing parts 304,306. The weight of the turbine module 352 causes the arrangement to seal.

The generator 302 also comprises a transverse bar 392 between the lowermost connecting members 322.

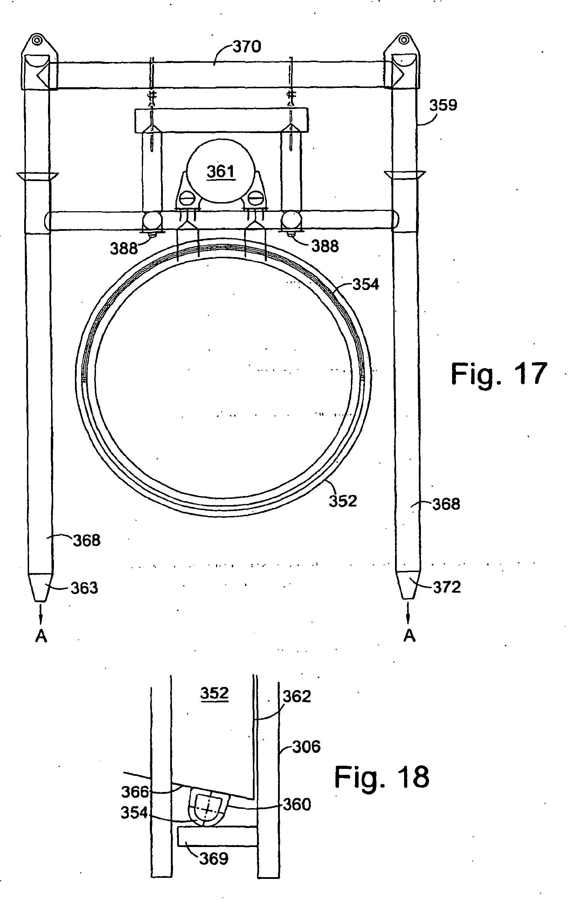

Referring to Figure 18, the sealing means 354 comprises an endless/closed length of, for example, polymer material. The sealing means 354 is suitably affixed to the turbine module 352. The sealing means 354 is typically hollow to allow such to be squeezed or crushed under load.

To install the turbine module 352, the turbine module 352 is lowered in the substantially vertical direction of arrow 'B' such that male parts of the docking device mate with and are received within female parts provided on the housing.

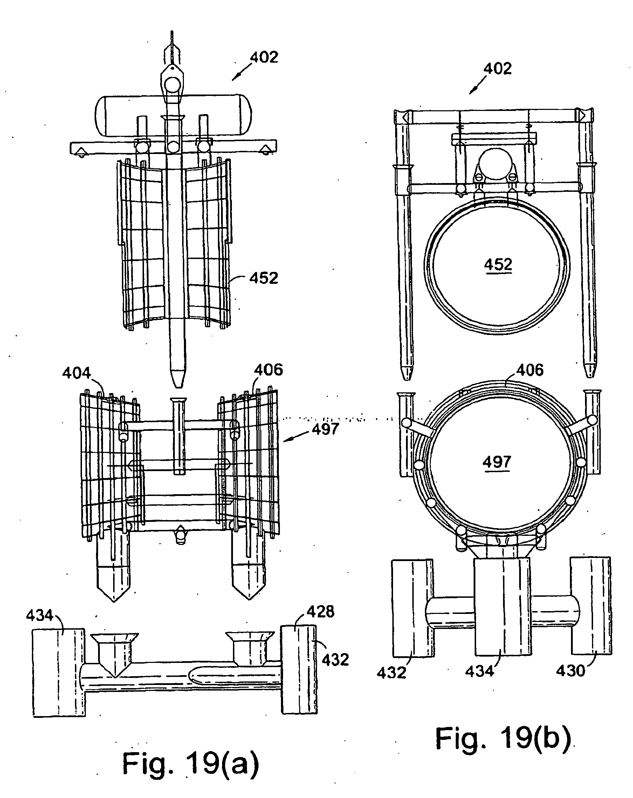

Referring to Figures 19(a) and (b), there is shown a power generator 402 according to a fourth embodiment of the present invention, like parts being denoted by like integers, except incremented by "400".

The generator 402 comprises a base 428 and an assembly comprising the housing parts 404,406, and turbine module 452.

In use, either on shore or preferably underwater, the base 428 is positioned and the assembly 497 lowered onto the base 428, and secured thereto via co-acting male and female portions 498, 499. This modification is useful where heavy lift vessels are not available or in limited supply. The legs 430,432,434 can either be prefilled with ballast or filled with ballast after installation.

It will be appreciated that the embodiments of the invention hereinbefore described are given by way of example only, and are not meant to limit the scope thereof in any way.

A generation farm employing power generators according to the invention may have a capacity of 8 MWs - enough to power 5,000 houses.

The present invention may use tidal streams to power turbines of the power generators. Tidal streams are typically relatively fast moving currents created by rising and falling tides.

The disclosed power generator may operate in both ebb and flood tides.

## Claims

1. An underwater power generator (2;102;302;402), such as an electrical power generator, comprising:
a base (28;128;328), wherein the base comprises first, second and third vertical legs (30;32;34;130;132;134;330;332;334;430;432;434) connected together by a plurality of bars (36;38;40;42;136;138;140;142), the base being a gravity foundation, and
at least one underwater turbine unit comprising a housing (50;150;350) having a liquid flow channel (44;144) therethrough and at least one turbine means (55) mounted in the flow channel for rotation in response to liquid flow through the flow channel, wherein
the first and second legs are provided at one end of the housing, and the third leg is provided at another end of the housing, such that the first and second legs are symmetrically disposed on respective sides of a longitudinal axis of the power generator, and the third leg is aligned with or provided upon the longitudinal axis,
the plurality of bars comprise:
a torsion bar (36; 136; 336) which is provided longitudinally extending from the third leg to between the first and second legs,
a further bar (38; 138) which is provided transversely between the first and second legs, an end of the torsion bar being connected to the further bar, and
first and second symmetrically disposed yet further bars (40;42;140;142;340;342) which are provided between the torsion bar and the further bar, the first and second yet further bars being connected to the torsion bar at a location intermediate the end and another end of the torsion bar, and wherein
the housing is connected to the torsion bar by a first support (74;174;374) and a second support (76;176;376).

2. An underwater power generator as claimed in claim 1, wherein the at least one underwater turbine unit is provided above the plurality of bars.

3. An underwater power generator as claimed in either of claims 1 or 2, wherein the legs are hollow.

4. An underwater power generator as claimed in claim 3, wherein the legs include ballast.

5. An underwater power generator as claimed in either of claims 3 or 4, wherein a volume of the first and second legs is substantially the same.

6. An underwater power generator as claimed in any of claims 3 to 5, wherein a volume of the third leg is substantially double the volume of either of the first or second legs.

7. An underwater power generator as claimed in any preceding claim, wherein the first, second and third legs are provided longitudinally outwardly of respective ends of the flow channel and the first and second legs are provided transversely outwardly of sides of the flow channel.

8. An underwater power generator as claimed in any preceding claim, wherein the housing comprises a first housing part (4;104;304;404), a second housing part (6;106;306;406), and a means (8;308) for connecting and/or spacing the first and second housing parts.

9. An underwater power generator as claimed in any preceding claim comprising a turbine module (52;152;352), wherein the turbine unit or module is removably receivable relative to or within the housing, and wherein there are provided sealing means (54;154;354) between the housing and the turbine module.

10. An underwater power generator as claimed in any preceding claim, wherein the underwater power generator comprises a turbine unit which provides a turbine unit part or turbine module (52;152;352) releasably mountable in the turbine unit, the turbine unit part including at least one of the at least one turbine means and a pump means.

## Patentansprüche

1. Unterwassergenerator (2; 102; 302; 402) wie zum Beispiel ein Generator für elektrischen Strom, der Folgendes umfasst:
eine Basis (28; 128; 328), wobei die Basis einen ersten, zweiten und dritten vertikalen Ständer (30; 32; 34; 130; 132; 134; 330; 332; 334; 430; 432; 434) umfasst, die durch mehrere Stäbe (36; 38; 40; 42; 136; 138; 140; 142) miteinander verbunden sind, wobei die Basis eine Schwerkraftgründung ist, und
wenigstens eine Unterwasserturbineneinheit, die ein Gehäuse (50; 150; 350) mit einem dadurch verlaufenden Flüssigkeitsströmungskanal (44; 144;) und wenigstens ein Turbinenmittel (55) umfasst, die in dem Strömungskanal zur Rotation als Reaktion auf den Strom von Flüssigkeit durch den Strömungskanal montiert ist, wobei
der erste und der zweite Ständer an einem Ende des Gehäuses vorgesehen sind und der dritte Ständer an einem anderen Ende des Gehäuses vorgesehen ist, so dass der erste und der zweite Ständer symmetrisch auf jeweiligen Seiten einer Längsachse des Generators angeordnet sind und der dritte Ständer mit der Längsachse fluchtet oder darauf vorgesehen ist,
wobei die mehreren Ständer Folgendes umfassen:
einen Drehstab (36; 136; 336), der vorgesehen ist, sich in Längsrichtung vom dritten Ständer zu einem Punkt zwischen dem ersten und zweiten Ständer zu erstrecken,
einen weiteren Stab (38; 138), der quer zwischen dem ersten und zweiten Ständer vorgesehen ist, wobei ein Ende des Drehstabes mit dem weiteren Stab verbunden ist, und
einen ersten und zweiten symmetrisch noch weiteren angeordneten Stab (40; 42; 140; 142; 340; 342), die zwischen dem Drehstab und dem weiteren Stab vorgesehen sind, wobei der erste und zweite noch weitere Stab mit dem Drehstab an einer Stelle zwischen dem Ende und einem anderen Ende des Drehstabes verbunden sind, und wobei
das Gehäuse mit dem Drehstab durch eine erste Stütze (74; 174; 374) und eine zweite Stütze (76; 176; 376) verbunden ist.

2. Unterwassergenerator nach Anspruch 1, wobei die wenigstens eine Unterwasserturbineneinheit über den mehreren Stäben vorgesehen ist.

3. Unterwassergenerator nach einem der Ansprüche 1 oder 2, wobei die Ständer hohl sind.

4. Unterwassergenerator nach Anspruch 3, wobei die Ständer Ballast enthalten.

5. Unterwassergenerator nach Anspruch 3 oder 4, wobei ein Volumen des ersten und zweiten Ständers im Wesentlichen das Gleiche ist.

6. Unterwassergenerator nach einem der Ansprüche 3 bis 5, wobei ein Volumen des dritten Ständers im Wesentlichen das Doppelte des Volumens des ersten oder zweiten Ständers beträgt.

7. Unterwassergenerator nach einem der vorherigen Ansprüche, wobei der erste, zweite und dritte Ständer longitudinal auswärts von jeweiligen Enden des Strömungskanals und der erste und zweite Ständer transversal auswärts von Seiten des Strömungskanals vorgesehen sind.

8. Unterwassergenerator nach einem der vorherigen Ansprüche, wobei das Gehäuse einen ersten Gehäuseteil (4; 104; 304; 404), einen zweiten Gehäuseteil (6; 106; 306; 406) und ein Mittel (8; 308) zum Verbinden und/oder Beabstanden des ersten und zweiten Gehäuseteils umfasst.

9. Unterwassergenerator nach einem der vorherigen Ansprüche, der ein Turbinenmodul (52; 152; 352) umfasst, wobei die/das Turbineneinheit oder -modul entfernbar relativ zu oder in dem Gehäuse aufgenommen werden kann und wobei Dichtungsmittel (54; 154; 354) zwischen dem Gehäuse und dem Turbinenmodul vorgesehen sind.

10. Unterwassergenerator nach einem der vorherigen Ansprüche, wobei der Unterwassergenerator eine Turbineneinheit umfasst, die ein in der Turbineneinheit entfernbar montierbares Turbineneinheitsteil oder Turbinenmodul (52; 152; 352) bereitstellt, wobei das Turbineneinheitsteil wenigstens eines der wenigstens einen Turbinenmittel und ein Pumpmittel aufweist.

## Revendications

1. Générateur de puissance sous-marine (2; 102; 302; 402), tel un générateur de puissance électrique, comprenant:
une base (28; 128; 328), dans lequel la base comprend un premier, un deuxième et un troisième pied vertical (30; 32; 34; 130; 132; 134; 330; 332; 334; 430; 432; 434) reliés les uns aux autres par une pluralité de barres (36; 38; 40; 42; 136; 138; 140; 142), la base étant une fondation par gravité, et
au moins une unité de turbine sous-marine comprenant un carter (50; 150; 350) pourvu d'un canal d'écoulement de liquide (44; 144) qui le traverse et au moins un moyen formant turbine (55) monté dans le canal d'écoulement d'une manière permettant une rotation en réponse à un écoulement de liquide à travers le canal d'écoulement, dans lequel
les premier et deuxième pieds sont prévus à une extrémité du carter et le troisième pied est prévu à une autre extrémité du carter, de manière à ce que les premier et deuxième pieds soient disposés symétriquement sur les côtés respectifs d'un axe longitudinal du générateur de puissance et que le troisième pied soit aligné avec l'axe longitudinal ou tombe sur celui-ci,
la pluralité de barres comprend :
une barre de torsion (36 ; 136 ; 336) s'étendant de manière longitudinale du troisième pied vers un endroit situé entre le premier et le deuxième pied,
une barre supplémentaire (38; 138) prévue transversalement entre les premier et deuxième pieds, une extrémité de la barre de torsion étant reliée à la barre supplémentaire, et
une première et une deuxième barre supplémentaire disposées symétriquement (40 ; 42 ; 140 ; 142 ; 340 ; 342) qui sont prévues entre la barre de torsion et la barre supplémentaire, les première et deuxième barres supplémentaires étant connectées à la barre de torsion à un endroit situé entre une extrémité et l'autre de la barre de torsion, et dans lequel
le carter est relié à la barre de torsion par un premier support (74; 174; 374;) et un deuxième support (76 ; 176 ; 376).

2. Générateur de puissance sous-marine selon la revendication 1, dans lequel la au moins une unité de turbine sous-marine est prévue au-dessus de la pluralité de barres.

3. Générateur de puissance sous-marine selon l'une quelconque des revendications 1 ou 2, dans lequel les pieds sont creux.

4. Générateur de puissance sous-marine selon la revendication 3, dans lequel les pieds sont lestés.

5. Générateur de puissance sous-marine selon l'une quelconque des revendications 3 ou 4, dans lequel le volume du premier pied et du deuxième pied est essentiellement identique.

6. Générateur de puissance sous-marine selon l'une quelconque des revendications 3 à 5, dans lequel un volume du troisième pied est sensiblement égal au double du volume du premier pied ou du deuxième pied.

7. Générateur de puissance sous-marine selon l'une quelconque des revendications précédentes, dans lequel les premier, deuxième et troisième pieds sont prévus à l'extérieur des extrémités respectives du canal d'écoulement dans le sens longitudinal et les premier et deuxième pieds sont prévus à l'extérieur des côtés du canal d'écoulement dans le sens transversal.

8. Générateur de puissance sous-marine selon l'une quelconque des revendications précédentes, dans lequel le carter comprend une première partie de carter (4; 104; 304; 404), une seconde partie de carter (6; 106; 306; 406) et un moyen (8; 308) pour relier et/ou espacer les première et seconde parties de carter.

9. Générateur de puissance sous-marine selon l'une quelconque des revendications précédentes, comprenant un module de turbine (52; 152; 352), dans lequel l'unité ou le module de turbine peut être reçu de manière amovible par rapport au carter ou à l'intérieur de celui-ci, et dans lequel des moyens d'étanchéité (54; 154; 354) sont prévus entre le carter et le module de turbine.

10. Générateur de puissance sous-marine selon l'une quelconque des revendications précédentes, dans lequel le générateur de puissance sous-marine comprend une unité de turbine qui fournit une partie d'unité de turbine ou module de turbine (52; 152; 352) pouvant être monté de manière détachable dans l'unité de turbine, la partie d'unité de turbine incluant au moins un élément parmi le au moins un moyen formant turbine et un moyen formant pompe.
